(19) Europäisches Patentamt
European Patent Office
Office européen des brevets

(11) **EP 4 477 940 B1**

(12) **EUROPÄISCHE PATENTSCHRIFT**

(45) Veröffentlichungstag und Bekanntmachung des Hinweises auf die Patenterteilung:
**15.04.2026   Patentblatt 2026/16**

(21) Anmeldenummer: **23179742.4**

(22) Anmeldetag: **16.06.2023**

(51) Internationale Patentklassifikation (IPC):
**F17C 7/00** (2006.01)

(52) Gemeinsame Patentklassifikation (CPC):
**F17C 5/007; F17C 5/00; F17C 7/00;**
F17C 2205/0138; F17C 2205/0326; F17C 2221/012;
F17C 2221/033; F17C 2223/0123; F17C 2223/036;
F17C 2227/0325; F17C 2250/03; F17C 2250/043;
F17C 2250/0439; F17C 2250/0631; F17C 2260/023;
(Forts.)

(54) **VERFAHREN FÜR DEN BETRIEB VON GASSPEICHERN**

METHOD FOR OPERATING GAS STORAGE DEVICES

PROCÉDÉ DE FONCTIONNEMENT DE RÉSERVOIRS DE GAZ

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**18.12.2024   Patentblatt 2024/51**

(73) Patentinhaber: **NPROXX B.V.**
**6422 RK Heerlen (NL)**

(72) Erfinder:
• **KRATSCHUN, Filipp**
**6422 RK Heerlen (NL)**
• **OTREMBA, Frank**
**52223 Stolberg (DE)**

(74) Vertreter: **Heuking Kühn Lüer Wojtek PartGmbB**
**Georg-Glock-Straße 4**
**40474 Düsseldorf (DE)**

(56) Entgegenhaltungen:
DE-A1- 102018 000 756       DE-A1- 102021 103 105
US-A1- 2016 290 561       US-A1- 2021 094 409

**(Forts. nächste Seite)**

(52) Gemeinsame Patentklassifikation (CPC): (Forts.)
F17C 2265/065; F17C 2270/0168; F17C 2270/0178;
F17C 2270/0184

(52) Gemeinsame Patentklassifikation (CPC): (Forts.)
F17C 2265/065; F17C 2270/0168; F17C 2270/0178;
F17C 2270/0184

## Beschreibung

### Gebiet der Erfindung

Die Erfindung betrifft ein Verfahren für den Betrieb von Gasspeichern. Insbesondere betrifft die Erfindung ein Verfahren für die Befüllung von Gasspeichern und die Entnahme von Gas aus Gasspeichern, insbesondere für die Befüllung von Gasspeichern und die Entnahme von Gas aus Gasspeichern für die Verwendung in einem Fahrzeug, wobei das Gas als Kraftstoff für den Betrieb des Fahrzeugs dient. Weiter betrifft die Erfindung ein System von Gasspeichern zur Durchführung des Verfahrens.

### Hintergrund der Erfindung

In den letzten Jahren ist das Interesse an der Verwendung alternativer Brennstoffe in der Fahrzeugindustrie enorm gestiegen. Aus diesem Grund kommen immer mehr Fahrzeuge, die durch gasförmige Kraftstoffe wie Erdgas, Autogas oder Wasserstoff angetrieben werden, auf den Markt. Dies bezieht sich auf alle möglichen Fahrzeuge, wie Kraftfahrzeuge, hier insbesondere Personenkraftfahrzeuge, aber auch Nutzfahrzeuge, wie beispielsweise Lastkraftwagen oder Busse, oder auch schienengebundene Fahrzeuge, als auch auf Wasserfahrzeuge, Luftfahrzeuge und Raumfahrzeuge. Darüber hinaus macht eine zunehmende Förderung von Erdgas und Fracking-Gas speziell in Ländern ohne entsprechendes Pipelinenetz eine Speicherung in Druckbehältern erforderlich.

Gegenwärtig benutzte zylinderförmige Druckbehälter besitzen eine Verstärkungsschicht aus Faserverbundmaterial aus Fasern eingebettet in einem Matrixmaterial, die als Außenschicht mittels eines Wickelverfahrens auf einen Innenbehälter (der sogenannte Liner) des Druckbehälters, der als Wickelkern fungiert, aufgewickelt wird. Während der Innenbehälter beispielsweise die Gasdichtigkeit des Druckbehälters garantiert, verleiht die Verstärkungsschicht aus Faserverbundmaterial dem Druckbehälter die notwendige mechanische Stabilität. Bei den Druckbehältern des Typs 3 wird ein mechanischer Innenbehälter (metallischer Liner) z.B. aus Aluminium oder Stahl eingesetzt, bei Druckbehältern des Typs 4 ist der Innenbehälter (Liner) aus Kunststoff. Es sind aber auch Druckbehälter bekannt, die nur aus einem oder mehreren metallischen Werkstoffen bestehen.

Druckbehälter werden mit Füllgas gefüllt. Da vor allem bei Wasserstofftankstellen einerseits sehr hohe Drücke und niedrige Temperaturen herrschen, andererseits Wasserstoff in Verbindung mit Sauerstoff hoch explosiv ist, sind an diese hohen Anforderungen zu stellen. Ferner muss an Tankstellen die Sicherheit bei der Befüllung der Fahrzeuge und das nacheinander Befüllen diverser Behälter gewährleistet werden.

In der Richtlinie SAE TIR J 2601 wird die Tankprozedur von wasserstoffbetriebenen Fahrzeugen beschrieben. Demnach wird zunächst die Kommunikationsfähigkeit des zu befüllenden Fahrzeuges bzw. dessen Wasserstoffbehälters festgestellt. Dabei muss der Wasserstoffbehälter nicht aus einem einzigen Behälter bestehen. Im Gegenteil ist es üblich, dass der Wasserstoffbehälter aus einem System miteinander wirkverbundener einzelner Behälter besteht. Das System weist üblicherweise ein Rückschlagventil auf, wobei es ebenso üblich ist, dass bei mehreren einzelnen Behältern in einem System jeder Behälter über ein Rückschlagventil verfügt. Man unterscheidet Fahrzeuge, die über ein elektronisches Interface diverse Parameter, wie bspw. Druck und Temperatur des Wasserstoffs im Behälter des Verbrauchers an die Tankstelle kommunizieren, und Fahrzeuge die nicht über Elektronik kommunizieren, sondern den Druck im Behälter durch eine Druckabfrage, also aufbringen eines Drucks auf das Gesamtsystem, an die Tankstelle weitergeben. Danach wird durch die Wasserstofftankstelle ein Druckstoß ausgeführt. Durch diesen Druckstoß werden alle Rückschlagventile geöffnet, so dass ein Druckaustausch zwischen dem Kraftfahrzeug und der Tankstelle durchgeführt werden kann. Dieser Druckstoß entspricht der Druckabfrage für nicht elektronisch kommunizierende Kraftfahrzeuge. Aufgrund des Druckaustausch stellt sich der Startdruck für die Betankung des jeweiligen Fahrzeugs ein. Im Anschluss wird zunächst ein Leckagetest des Systems durchgeführt, um die Sicherheit zu gewährleisten. Danach beginnt die Füllprozedur, deren Parameter, insbesondere der Fülldruck rampenförmig in Abhängigkeit des Startdrucks gewählt wird. Dabei bedient man sich heutzutage üblicherweise der Durchschnitts-Druckanstiegsraten-Methode, welche abhängig von der Starttemperatur und des Startdrucks eine Druckanstiegsrate (max. ca. 60 g Wasserstoff/s) bestimmt, so dass die Fülldauer abhängig von der Tankgröße ist.

Der maximale Betriebsdruck insbesondere bei der Befüllung eines Druckbehälters bzw. Druckbehältersystems mit Wasserstoff kann je nach Anwendung beispielsweise zwischen 200 und 1200 bar, typischerweise zwischen 350 und 875 bar, betragen. Aus diesem Druckbehälter oder Druckbehältersystem kann dann eine Brennstoffzelle oder ein Verbrennungsmotor mit Wasserstoff versorgt werden. Beim Befüllen erwärmt sich das in den Druckbehälter bzw. das Druckbehältersystem einströmende Gas durch Kompression. Soll eine Brennstoffzelle oder ein Verbrennungsmotor nach der Befüllung eines Druckbehälters bzw. Druckbehältersystems in Betrieb gesetzt werden, wobei der Wasserstoff aus diesem Druckbehälter bzw. Druckbehältersystem entnommen werden soll, so muss der Tankdruck auf den Druck der Brennstoffzelle oder des Verbrennungsmotors heruntergedrosselt werden. Dieser Druck beträgt im Falle der Brennstoffzelle typisch zwischen 8 und 12 bar, im Falle des Verbrennungsmotors ca. 30 bar. Die Druckreduktion wird üblicherweise mit einem Druckminderer erreicht. Durch die Abdrosselung und dem damit verbundenen Joule-Thomson Effekt am Druckminderer erhöht sich die Temperatur beispielsweise von Wasserstoff in Abhängigkeit der Druckdifferenz zwischen Hochdruck zu Niederdruck. Diese Temperaturerhöhung kann im Bereich von bis zu 40 K liegen. Übersteigt die Temperatur nach dem Druckminderer die zulässigen Grenzen der Ventile oder der Brennstoffzelle, muss der Betrieb für so lange unterbrochen werden, bis sich das Gas weit genug abgekühlt hat. Die zulässige obere Grenztemperatur einer Brennstoffzelle, d.h. die maximale Eintrittstemperatur des Brenngases, beträgt typisch ca. 85 °C. Zwar kühlt sich das Füllgas bei der Entnahme, beispielsweise um es einer Brennstoffzelle zuzuführen, ab. Gerade bei der gewünschten schnellen Befüllung eines Druckbehälters oder Druckbehältersystems mit Wasserstoff reicht diese Abkühlung zumindest in zeitlicher Nähe nach der Befüllung nicht aus, um die Füllgastemperatur unter die obere Grenztemperatur zu bringen. Da das Fahrzeug auch unmittelbar nach der Befüllung fahrbereit sein soll, ist die Einhaltung einer entsprechenden Wartezeit für die Abkühlung nicht gewünscht. Es werden daher üblicherweise Kühlvorrichtungen vorgesehen, um das Füllgas nach der Befüllung auf eine Temperatur unterhalb der Grenztemperatur abzukühlen.

Andererseits kann es beispielsweise bei sehr kalten Umgebungstemperaturen vorkommen, dass das Füllgas durch die Abkühlung bei der Entnahme zu sehr abkühlt. Brennstoffzellen arbeiten nur in einem bestimmten Temperaturbereich effizient, wobei sie unter einer unteren Grenztemperatur nicht mehr arbeiten können. Daher ist es üblich, Brennstoffzellen im Betrieb zu temperieren, d.h. bedarfsweise zu beheizen oder zu kühlen. Wird ein Fahrzeug mit einer Brennstoffzelle aber in sehr kalter Umgebung nach einer gewissen Standzeit in Betrieb genommen, muss zunächst abgewartet werden, bis die Temperierung die Brennstoffzelle über die untere Grenztemperatur aufgeheizt hat und auch das durch die Standzeit in sehr kalter Umgebung auf eine sehr niedrige Temperatur abgekühlte Füllgas soweit erwärmt ist, dass es die Brennstoffzellentemperatur im Betrieb nicht wieder unter die untere Grenztemperatur abkühlt. Daher wird üblicherweise eine minimale Gaseintrittstemperatur in die Brennstoffzelle definiert, die vom Speichersystem einzuhalten ist. Diese beträgt beispielsweise -40°C. Wird die Eingangstemperatur zu klein, muss die Brennstoffzelle abgeschaltet werden, bis die Gaseintrittstemperatur den zugelassenen Bereich erreicht hat. Auch in diesem Fall entstehen also unerwünschte Wartezeiten.

Darüber hinaus ist es natürlich wünschenswert, dass die Gaseintrittstemperatur möglichst nah an bzw. sogar oberhalb der der Grenztemperatur liegt, um den Energiebedarf der Brennstoffzelle zur Temperierung des Gases auf Betriebstemperatur zu minimieren. Ein weiterer Nachteil der Temperierung von Brennstoffzelle und/oder Füllgas ist, dass diese Temperierung selbst aufwändig ist und im Betrieb Energie verbraucht.

Aus der deutschen Offenlegungsschrift DE 10 2021 103 105 A1 ist eine Vorrichtung für ein Druckbehältersystem bekannt, das einen ersten Druckbehälter mit einem ersten Druckbehälter-Ventil und einen zweiten Druckbehälter mit einem zweiten Druckbehälter-Ventil umfasst, die jeweils ausgebildet sind, Brennstoff aus dem jeweiligen Druckbehälter in eine Leitung zur Versorgung eines Energiewandlers zu leiten. Die Vorrichtung ist eingerichtet, zu bestimmen, dass eine Druckanpassungs-Situation vorliegt, bei der sich aufgrund einer Temperaturänderung des ersten und/oder des zweiten Druckbehälters Innendrücke in dem ersten und zweiten Druckbehälter voneinander unterscheiden. Die Vorrichtung ist ferner eingerichtet, in Reaktion auf die erkannte Druckanpassungs-Situation zu veranlassen, dass das erste Druckbehälter-Ventil und das zweite Druckbehälter-Ventil zeitlich begrenzt geöffnet werden, um die Innendrücke in dem ersten Druckbehälter und in dem zweiten Druckbehälter anzunähern.

**Zusammenfassung der Erfindung**

Der hier vorliegenden Erfindung liegt die Aufgabe zugrunde, dem Stand der Technik eine Verbesserung oder eine Alternative zur Seite zu stellen.

Nach einem ersten Aspekt löst die gestellte Aufgabe ein Verfahren zur Entnahme eines Brennstoffs aus einem Druckbehältersystems mit einem ersten Druckbehälter mit einem ersten Volumen und einem zweiten Druckbehälter mit einem zweiten Volumen, wobei das erste Volumen kleiner ist als das zweite Volumen, und wobei entweder der Brennstoff zunächst zumindest teilweise aus dem ersten Druckbehälter entnommen wird, bevor der Brennstoff ausschließlich aus dem zweiten Druckbehälter entnommen wird, sofern der Brennstoff in dem zweiten Druckbehälter eine Temperatur außerhalb eines zuvor definierten zulässigen Temperaturfensters aufweist, oder der Brennstoff zunächst zumindest teilweise aus dem zweiten Druckbehälter entnommen wird, bevor der Brennstoff ausschließlich aus dem ersten Druckbehälter entnommen wird, sofern der Brennstoff in dem zweiten Druckbehälter eine Temperatur innerhalb eines zuvor definierten Temperaturfensters aufweist, wobei die Brennstoffentnahme aus dem zweiten Druckbehälter gestoppt und auf den ersten Druckbehälter umgeschaltet wird, sobald die Temperatur des Brennstoffs aus dem zweiten Druckbehälter das zuvor definierte Temperaturfenster verlässt. Damit ist es auch möglich, dass der Brennstoff zunächst aus beiden Druckbehältern entnommen wird, bevor der Brennstoff ausschließlich aus dem ersten oder zweiten Druckbehälter entnommen wird.

Begrifflich sei hierzu folgendes erläutert:
Es sei ausdrücklich darauf hingewiesen, dass im Rahmen der hier vorliegenden Patentanmeldung unbestimmte Artikel und unbestimmte Zahlenangaben wie "ein...", "zwei..." usw. im Regelfall als mindestens-Angaben zu verstehen sein sollen, also als "mindestens ein...", "mindestens zwei..." usw., sofern sich nicht etwa aus dem Kontext oder dem konkreten Text einer bestimmten Stelle ergibt, dass etwa dort nur "genau ein...", "genau zwei..." usw. gemeint sein soll. Weiterhin sind alle Zahlenangaben sowie Angaben zu Verfahrensparametern und/oder Vorrichtungsparametern im technischen Sinne zu verstehen, d.h. als mit den üblichen Toleranzen versehen zu verstehen. Auch aus der expliziten Angabe der Einschränkung "wenigstens" oder "mindestens" o.ä. darf nicht geschlossen werden, dass bei der einfachen Verwendung von "ein", also ohne die Angabe von "wenigstens" o.ä., ein "genau ein" gemeint ist.

Die Begriffe "Brennstoff", "Füllgas", "Gas", "Kraftstoff", etc. werden in diesem Dokument synonym verwendet. Die Erfindung kann allgemein für die Entnahme von gasförmigen Stoffen aus einem Druckbehältersystem verwendet werden. Besonders vorteilhaft lässt sich die Erfindung aber bei der Verwendung von Wasserstoff als Brennstoff für den Betrieb einer Brennstoffzelle oder für die Verbrennung in einem entsprechenden Verbrennungsmotor zum Antrieb eines Fahrzeugs verwenden.

Als "Druckbehältersystem" wird in diesem Dokument eine Mehrzahl miteinander wirkverbundener Druckbehälter verstanden. Beispielsweise weisen Fahrzeuge mit Wasserstoffantrieb üblicherweise Druckbehältersysteme auf, wobei die miteinander wirkverbundenen Druckbehälter unterschiedliche Volumina aufweisen können. Druckbehälter für Wasserstoff müssen hohen Innendrücken bis zu 1.200 bar standhalten und weisen daher üblicherweise eine Kugelform oder einen zylindrischen Mittelteil auf, wobei der zylindrische Mittelteil durch Polkappen verschlossen ist. Aus Platzgründen werden bei Fahrzeugen üblicherweise mehrere Druckbehälter zu einem Druckbehältersystem kombiniert, wobei die einzelnen Druckbehälter unterschiedliche Volumina aufweisen können und üblicherweise über eine gemeinsame Füllleitung befüllbar sind. Die Entnahme des Wasserstoffs erfolgt über ein Entnahmeventil, wobei üblicherweise jeder Druckbehälter über ein separates Entnahmeventil verfügt.

Mit dem allgemeinen Begriff "Fahrzeug" ist in diesem Dokument jedes mögliche Fahrzeug, wie ein Kraftfahrzeug, hier insbesondere ein Personenkraftfahrzeug oder ein Nutzfahrzeug, wie beispielsweise ein Lastkraftwagen, Transporter, Bus oder landwirtschaftliches Fahrzeug, oder auch ein schienengebundenen Fahrzeug, als auch ein Wasserfahrzeug, Luftfahrzeug oder Raumfahrzeug bezeichnet. Weiterhin sollen auch entsprechend angetriebene Arbeitsmaschinen von dem Begriff umfasst sein.

Der Befüllvorgang wird insbesondere bei Fahrzeugen auch "Betankung" genannt.

Unter einem "Druckminderer" wird ein Druckventil zum Einbau in ein Schlauch- oder Leitungssystem verstanden, das trotz unterschiedlicher Drücke auf der Eingangsseite dafür sorgt, dass auf der Ausgangsseite ein bestimmter Ausgangsdruck nicht überschritten wird. Der Druck auf der Eingangsseite wird in diesem Dokument auch als "Hochdruck" bezeichnet, während der Druck auf der Ausgangsseite auch als "Niederdruck" bezeichnet wird.

Der "Joule-Thomson-Effekt" bezeichnet die Temperaturänderung eines realen, d.h. nicht idealen, Gases bei einer isenthalpen Druckminderung. Die Richtung und Stärke des Effekts wird durch die Stärke der anziehenden und abstoßenden Kräfte zwischen den Gasmolekülen bestimmt. Unter Normalbedingungen gilt für die meisten Gase und Gasgemische, z. B. für Luft, dass die Temperatur bei der Entspannung sinkt. Dagegen steigt sie beispielsweise bei Wasserstoff.

Ein "Temperaturfenster" bezeichnet einen Temperaturbereich zwischen einer unteren und einer oberen Grenztemperatur.

Beim Befüllen eines Druckbehälters mit einem Gas erwärmt sich Gas durch die geleistete Kompressionsarbeit. Die geleistete Kompressionsarbeit ist dabei proportional dem Volumen des Druckbehälters Das Volumen eines Druckbehälters mit einem im Wesentlichen zylindrischen Mittelteil wiederum ist direkt proportional seiner Länge und überproportional zu seinem Durchmesser, wobei der Durchmesser quadratisch in das Volumen eingeht.

Druckbehältersysteme weisen üblicherweise ein Rückschlagventil auf, wobei es ebenso üblich ist, dass bei mehreren einzelnen Druckbehältern in einem Druckbehältersystem jeder Druckbehälter über ein Rückschlagventil verfügt. Wird ein Druckbehältersystem befüllt, wird zunächst der herrschende Druck in dem Druckbehältersystem abgefragt. Dazu müssen alle Rückschlagventile beispielsweise über einen Druckstoß auf das Gesamtsystem geöffnet werden. Dazu sind alle Druckbehälter des Druckbehältersystems mit einer gemeinsamen Befüllleitung verbunden und werden also üblicherweise bei der Befüllung parallel befüllt.

Weist ein Druckbehältersystem einen ersten Druckbehälter mit einem ersten Volumen und einem zweiten Druckbehälter mit einem zweiten Volumen auf, wobei das erste Volumen kleiner ist als das zweite Volumen, so wird bei dem ersten Druckbehälter weniger Kompressionsarbeit geleistet als bei dem zweiten Druckbehälter. Dadurch erwärmt sich das Füllgas in dem ersten Druckbehälter weniger als das in dem zweiten Druckbehälter. Darüber hinaus ist das Verhältnis von Oberfläche zu Volumen bei dem ersten Druckbehälter größer als bei dem zweiten Druckbehälter. Mit anderen Worten weist der Druckbehälter mit dem kleineren Volumen mehr Oberfläche im Verhältnis zu seinem Volumen auf als der Druckbehälter mit dem größeren Volumen. Über die Oberfläche wird aber Wärme mit der Umgebung ausgetauscht. Da sich das Füllgas durch die geleistete Kompressionsarbeit üblicherweise über die Umgebungstemperatur des Druckbehälters erwärmt, wird also bei dem ersten Druckbehälter mehr Wärme aus dem Füllgas an die Umgebung abgeführt als bei dem zweiten Druckbehälter.

Dabei darf der für den Behälter zulässige Temperaturbereich nicht verlassen werden. Zusätzlich darf die Temperatur des Füllgases nach dem Druckregler nicht außerhalb des für die Brennstoffzelle zulässigen Bereichs liegen. Die beiden Temperaturbereiche können sich ggf. unterscheiden.

Sofern der Brennstoff in dem zweiten Druckbehälter eine Temperatur außerhalb eines zuvor definierten zulässigen Temperaturfensters aufweist, insbesondere durch die geleistete Kompressionsarbeit eine höhere Temperatur als die obere Grenztemperatur, die beispielsweise für übliche Brennstoffzellen bei 85 °C liegt, kann es also vorteilhaft sein, zunächst zumindest teilweise aus dem ersten Druckbehälter zu entnehmen, bevor der Brennstoff auch oder ausschließlich aus dem zweiten Druckbehälter entnommen wird. Dadurch kann der Brennstoff in dem zweiten Druckbehälter Zeit erhalten, um über den Wärmeaustausch mit der Umgebung unter die obere Grenztemperatur abzukühlen. Zumindest kann so eine eventuell vorhandene Kühlvorrichtung für den Brennstoff kleiner dimensioniert werden. Weiterhin kann Energie für die Kühlung des Brennstoffs minimiert werden. In bestimmten Fällen kann es sogar möglich sein, auf eine aktive Brennstoffkühlung komplett zu verzichten.

Insbesondere bei Lastkraftwagen werden große Reichweiten mit einer Befüllung verlangt, was zu großen mitgeführten Brennstoffvolumina führt. Andererseits ist der zur Verfügung stehende Platz für die Installation von Druckbehältersystemen begrenzt, so dass hier jeder zur Verfügung stehende Platz für die Installation eines Druckbehälters ausgenutzt wird, wobei die Druckbehälter unterschiedliche Volumina, insbesondere durch unterschiedliche Druckbehälterdurchmesser, aufweisen. Bei den heute üblichen Durchmesserverhältnissen von Druckbehältern von in Lastkraftwagen verbauten Druckbehältersystemen ergeben sich über die beschriebenen Effekte Temperaturunterschiede von 10 K bis 25 K zwischen dem Brennstoff im Druckbehälter mit dem größten Volumen und dem im Druckbehälter mit dem kleinsten Volumen.

Sofern der Brennstoff in dem zweiten Druckbehälter eine Temperatur innerhalb eines zuvor definierten Temperaturfensters aufweist, kann alternativ der Brennstoff zunächst zumindest teilweise aus dem zweiten Druckbehälter entnommen werden, bevor der Brennstoff auch oder ausschließlich aus dem ersten Druckbehälter entnommen wird, wobei die Brennstoffentnahme aus dem zweiten Druckbehälter gestoppt und auf den ersten Druckbehälter umgeschaltet werden kann, sobald die Temperatur des Brennstoffs aus dem zweiten Druckbehälter das zuvor definierte Temperaturfenster verlässt. Dies kann insbesondere in dem Fall vorteilhaft sein, wenn ein Fahrzeug bei sehr niedrigen Umgebungstemperaturen betankt werden soll, wobei ein Druckbehältersystem in dem Fahrzeug verbaut ist, und wobei das Fahrzeug in zeitlich kurzer Folge nach dem Befüllvorgang, beispielsweise unmittelbar nach dem Befüllvorgang, in Betrieb genommen werden soll. Ein solches Szenario kann beispielsweise in sehr kalten Gegenden der Erde, beispielsweise in Alaska, spielen. Hier herrschen nicht selten Umgebungstemperaturen von - 30 °C. Durch die beim Befüllen geleistete Kompressionsarbeit erwärmt sich zwar der Brennstoff, kühlt aber durch die oben beschriebenen Effekte insbesondere in dem ersten Druckspeicher auch schnell wieder ab. Durch die Entnahme des Brennstoffs zunächst aus dem zweiten Druckbehälter kann nun zunächst das Fahrzeug betrieben werden, während eine eventuell vorhandene Temperiervorrichtung die Temperatur des Brennstoffs auch in dem ersten Druckbehälter sicher in dem zuvor definierten Temperaturfenster hält. So kann auch unter solchen extremen Umweltbedingungen unter Umständen ein sicherer Betrieb von Fahrzeugen auch unmittelbar nach einem Betankungsvorgang sichergestellt werden. Die Bedingungen können unter Umständen auch durch eine gemeinsame Entnahme aus allen Behältern eingehalten werden.

Allgemein ist üblicherweise die Temperatur des Füllgases in einem großen Druckbehälter höher als die in einem kleineren Druckbehälter. Um die Füllgastemperatur in dem größeren Behälter zu reduzieren, kann der kleinere Druckbehälter nach Füllung des größeren aus diesem zumindest teilweise gefüllt werden. Die Entnahme aus den jeweiligen Druckbehältern kann gestoppt werden, wenn die jeweilige Temperaturschwelle erreicht ist.

In einer vorteilhaften Ausführungsform des erfindungsgemäßen Verfahrens wird der erste Druckbehälter nach einer zumindest teilweisen Entleerung mit Brennstoff aus dem zweiten Druckbehälter aufgefüllt. Die Auffüllung des ersten Druckbehälters kann ohne die Temperaturrestriktionen des Verbrauchers, also beispielsweise einer Brennstoffzelle oder eines Verbrennungsmotors, erfolgen. In dem ersten Druckbehälter können sich die Temperaturen wie oben dargestellt schneller auf den zuvor definierten Temperaturbereich einstellen als in dem zweiten Druckbehälter. Diese Ausführungsform kann insbesondere dann vorteilhaft sein, wenn mehr als zwei Druckbehälter mit unterschiedlichen Volumina in dem Druckbehältersystem vorhanden sind, da immer ein erster Druckbehälter mit einem kleineren Volumen aus einem zweiten Druckbehälter mit einem größeren Volumen gefüllt werden kann, wobei gleichzeitig Brennstoff aus einem anderen ersten Druckbehälter entnehmbar ist.

In einer weiteren vorteilhaften Ausführungsform des erfindungsgemäßen Verfahrens wird die Entnahme von Brennstoff aus dem ersten Druckbehälter oder dem zweiten Druckbehälter über eine Kontrolleinheit gesteuert, wobei die Druckbehälter jeweils ein Entnahmeventil aufweisen und die Kontrolleinheit die Entnahmeventile ansteuert, wobei die Kontrolleinheit Informationen über die Temperatur des Brennstoffs in dem ersten Druckbehälter und in dem zweiten Druckbehälter empfängt und diese Temperaturen mit einem zuvor definierten Temperaturfenster vergleicht. Optional kann auch noch die Information der Temperaturen nach dem Druckregler gemessen oder vom Kontrollgerät mittels eines Modells berechnet werden und in die Bewertung eingehen. Die Druckbehälter weisen üblicherweise jeweils ein Entnahmeventil auf, wobei jedes Entnahmeventil in dem Druckbehältersystem separat ansteuerbar ist. Auf diese Weise lässt sich das erfindungsgemäße Verfahren leicht umsetzen.

Nach einem zweiten Aspekt löst die gestellte Aufgabe eine Vorrichtung zur Durchführung des erfindungsgemäßen Verfahrens, wobei die Vorrichtung ein Druckbehältersystem mit einem ersten Druckbehälter mit einem ersten Volumen und mit einem zweiten Druckbehälter mit einem zweiten Volumen aufweist, wobei das erste Volumen kleiner ist als das zweite Volumen, wobei der erste Druckbehälter und der zweite Druckbehälter jeweils ein Entnahmeventil aufweisen und die Vorrichtung eine Kontrolleinheit aufweist, wobei die Entnahmeventile von der Kontrolleinheit ansteuerbar sind, wobei Informationen über die Temperatur des Brennstoffs in dem ersten Druckbehälter und in dem zweiten Druckbehälter von der Kontrolleinheit empfangbar sind. Beispielsweise können die Druckbehälter Temperatursensoren aufweisen, die die Temperatur an die Kontrolleinheit weiterleiten können. Die Kontrolleinheit kann platzsparend unabhängig von dem Druckbehältersystem in dem Fahrzeug verbaut sein.

In einer vorteilhaften Ausführungsform der erfindungsgemäßen Vorrichtung weisen der erste Druckbehälter und der zweite Druckbehälter jeweils ein im Wesentlichen zylindrisch geformtes Segment auf, wobei das im Wesentlichen zylindrisch geformte Segment des ersten Druckbehälters einen Durchmesser aufweist, der kleiner ist als der Durchmesser des im Wesentlichen zylindrisch geformten Segments des zweiten Druckbehälters. Da die geleistete Kompressionsarbeit dabei proportional dem Volumen des Druckbehälters ist und das Volumen eines Druckbehälters mit einem im Wesentlichen zylindrischen Mittelteil wiederum direkt proportional seiner Länge und überproportional zu seinem Durchmesser ist, wobei der Durchmesser quadratisch in das Volumen eingeht, ist über die Veränderung des Durchmessers ein größerer Effekt erzielbar als über die Länge des Druckbehälters. Auch bezüglich der Oberfläche des Druckbehälters ist der Effekt über die Veränderung des Durchmessers größer als über die Variation seiner Länge.

In einer weiteren Ausführungsform der erfindungsgemäßen Vorrichtung weist die Kontrolleinheit ein System zur Datenverarbeitung auf, wobei das System zur Datenverarbeitung Mittel zur Ausführung des erfindungsgemäßen Verfahrens umfasst. Ein Datenverarbeitungssystem kann die Durchführung des Verfahrens in großer Schnelligkeit automatisiert sicherstellen.

Die zuvor beschriebenen Ausführungsformen können einzeln verwendet oder auch beliebig miteinander kombiniert werden.

## Detaillierte Beschreibung der Erfindung

Die Erfindung sei nachstehend anhand von Ausführungsbeispielen unter Bezugnahme auf die Zeichnungen näher erläutert. Dort zeigen

Fig. 1    ein Ablaufdiagramm des erfindungsgemäßen Verfahrens 100;

Fig. 2    ein erfindungsgemäßes Druckbehältersystem 10.

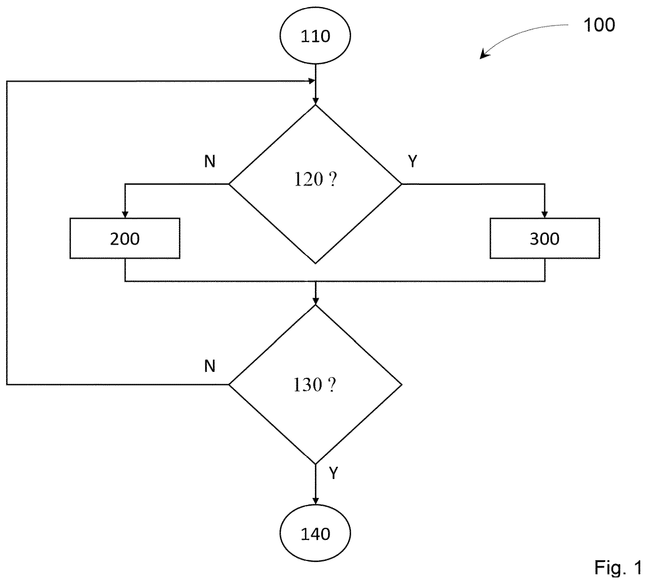

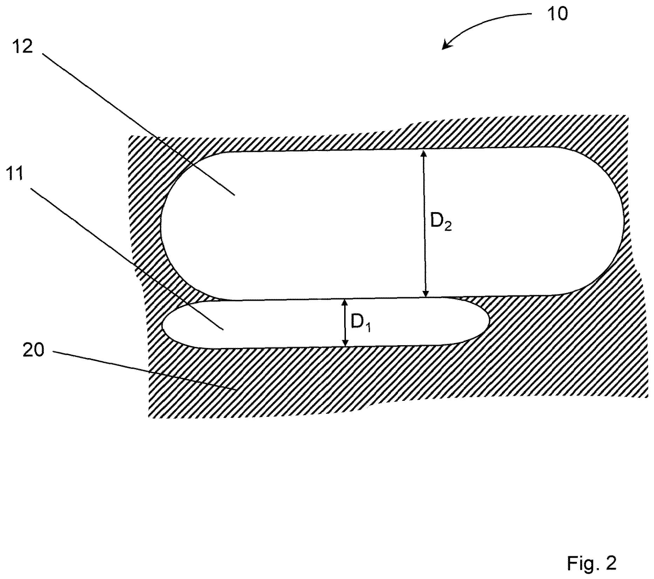

Fig. 1 zeigt ein Ablaufdiagramm des erfindungsgemäßen Verfahrens 100. Das Verfahren 100 startet am Prozessstart 110 mit der Inbetriebnahme eines mit Brennstoff aus einem Druckbehältersystem 10 zu versorgenden Verbraucher (nicht gezeigt), beispielsweise einem Fahrzeug mit einer Brennstoffzelle, wobei der Brennstoff Wasserstoff ist, der in dem Druckbehältersystem 10 gelagert ist. In der Brennstoffzelle wird aus dem Wasserstoff Strom beispielsweise für einen Elektromotor für den Antrieb des Fahrzeugs gewonnen. Das Druckbehältersystem 10 weist einen ersten Druckbehälter 11 und einen zweiten Druckbehälter 12 auf (siehe auch Fig. 2). Dabei beträgt die Temperatur des Brennstoffs im zweiten Druckbehälter 12 $\vartheta_2$. Der Verbraucher, beispielsweise eine Brennstoffzelle, benötigt den Brennstoff mit einer Temperatur, die innerhalb eines verbraucherspezifischen Temperaturfensters TB liegt, wobei das Temperaturfenster TB durch eine untere Grenztemperatur $\vartheta_{g,u}$ und eine obere Grenztemperatur $\vartheta_{g,o}$ definiert ist. Für eine Brennstoffzelle liegen diese Temperaturen bei ca. 70 °C für die untere Grenztemperatur $\vartheta_{g,u}$ und ca. 85 °C für die obere Grenztemperatur $\vartheta_{g,o}$. Im erfindungsgemäßen Verfahren wird unmittelbar nach dem Start in Schritt 120 abgefragt, ob die Brennstofftemperatur $\vartheta_2$ im zweiten Druckbehälter 12 innerhalb des zuvor definierten Temperaturfensters TB liegt, also ob die Brennstofftemperatur $\vartheta_2$ im zweiten Druckbehälter 12 zwischen der unteren Grenztemperatur $\vartheta_{g,u}$ und der oberen Grenztemperatur $\vartheta_{g,o}$ liegt, wobei die Temperaturen am Ausgang des Druckminderes abgefragt werden können:

$$\vartheta_{g,u} \leq \vartheta_2 \leq \vartheta_{g,o}$$

Ist dies der Fall, wird der Ja-Ausgang Y der Abfrage gewählt und in Schritt 300 der Brennstoff aus dem zweiten Druckbehälter 12 entnommen. Liegt die Brennstofftemperatur $\vartheta_2$ im zweiten Druckbehälter 12 nicht zwischen der unteren Grenztemperatur $\vartheta_{g,u}$ und der oberen Grenztemperatur $\vartheta_{g,o}$, so wird in Schritt 120 der Nein-Ausgang N gewählt und in Schritt 200 der Brennstoff aus dem ersten Druckbehälter 11 entnommen. Ständig wird in Schritt 130 abgefragt, ob der Prozess gestoppt werden soll, d.h. ob die Stromgewinnung in der Brennstoffzelle gestoppt werden soll. Wird diese Abfrage mit ja beantwortet, wird nach dem Ja-Ausgang Y in Schritt 140 das Verfahren der Brennstoffentnahme gestoppt. Wird die Frage hingegen mit nein beantwortet, wird der Nein-Ausgang N gewählt und das Verfahren mit Schritt 120, d.h. der Abfrage, ob die Brennstofftemperatur $\vartheta_2$ im zweiten Druckbehälter 12 innerhalb des zuvor definierten Temperaturfensters TB liegt, fortgesetzt. Es ist auch möglich, bei einer prognostizierten wahrscheinlichen zukünftigen Unterschreitung der Grenztemperatur die Leistung der Brennstoffzelle zu reduzieren und damit die Abschaltung zu verhindern oder zumindest zu verschieben.

Fig. 2 zeigt ein erfindungsgemäßes Druckbehältersystem 10. Ein erster Druckbehälter 11 und ein zweiter Druckbehälter 12 sind in ein Fahrzeugchassis 20 eingebaut. Das Fahrzeugchassis 20 ist dabei derart geformt, dass der zweite Druckbehälter 12 einen Durchmesser $D_2$ und der erste Druckbehälter 11 einen Durchmesser $D_1$ aufweist, wobei der erste Durchmesser $D_1$ kleiner ist als der zweite Durchmesser $D_2$. Der erste Druckbehälter 11 weist ein erstes Volumen $V_1$ auf und der zweite Druckbehälter 12 ein zweites Volumen $V_2$, wobei das erste Volumen $V_1$ kleiner ist als das zweite Volumen $V_2$. Sofern der Brennstoff in dem zweiten Druckbehälter 12 eine Temperatur $\vartheta_2$ außerhalb eines zuvor durch eine untere Grenztemperatur $\vartheta_{g,\,u}$ und eine obere Grenztemperatur $\vartheta_{g,\,o}$ definierten zulässigen Temperaturfensters TB aufweist, insbesondere durch die bei der Befüllung geleistete Kompressionsarbeit eine höhere Temperatur $\vartheta_2$ als die obere Grenztemperatur $\vartheta_{g,\,o}$, wird zunächst zumindest teilweise Brennstoff aus dem ersten Druckbehälter 11 entnommen, bevor Brennstoff aus dem zweiten Druckbehälter 12 entnommen wird. Dadurch kann der Brennstoff in dem zweiten Druckbehälter 12 Zeit erhalten, um über den Wärmeaustausch mit der Umgebung unter die obere Grenztemperatur $\vartheta_{g,\,o}$ abzukühlen. Zumindest kann so eine eventuell vorhandene Kühlvorrichtung (nicht gezeigt) für den Brennstoff kleiner dimensioniert werden. Weiterhin kann Energie für die Kühlung des Brennstoffs minimiert werden. In bestimmten Fällen kann es sogar möglich sein, auf eine aktive Brennstoffkühlung komplett zu verzichten.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

**Liste der verwendeten Bezugszeichen**

| 10 | Druckbehältersystem |
|----|----|
| 11 | erster Druckbehälter |
| 12 | zweiter Druckbehälter |
| 13 | Entnahmeventil |
| 20 | Fahrzeugchassis |
| 100 | Verfahren |
| 110 | Prozessstart |
| 120 | Abfrage, ob die Brennstofftemperatur $\vartheta_2$ im zweiten Druckbehälter 12 innerhalb des zuvor definierten Temperaturfensters TB liegt ($\vartheta_{g,\,u} \leq \vartheta_2 \leq \vartheta_{g,\,o}$) |
| 130 | Abfrage, ob Prozess gestoppt werden soll |
| 140 | Prozessstopp |
| 200 | Entnahme Brennstoff aus dem ersten Druckbehälter 11 |
| 300 | Entnahme Brennstoff aus dem zweiten Druckbehälter 12 |
| $D_1$ | erster Durchmesser |
| $D_2$ | zweiter Durchmesser |
| $V_1$ | erstes Volumen |
| $V_2$ | zweites Volumen |
| Y | Ja-Ausgang |
| N | Nein-Ausgang |
| $\vartheta_1$ | Brennstofftemperatur im ersten Druckbehälter |
| $\vartheta_2$ | Brennstofftemperatur im zweiten Druckbehälter |
| $\vartheta_{g,\,u}$ | untere Grenztemperatur |

**Patentansprüche**

1. Verfahren (100) zur Entnahme eines Brennstoffs aus einem Druckbehältersystem (10) mit einem ersten Druckbehälter (11) mit einem ersten Volumen ($V_1$) und einem zweiten Druckbehälter (12) mit einem zweiten Volumen ($V_2$), wobei das erste Volumen ($V_1$) kleiner ist als das zweite Volumen ($V_2$), **dadurch gekennzeichnet,**

   - **dass** der Brennstoff zunächst zumindest teilweise aus dem ersten Druckbehälter (11) entnommen wird, bevor der Brennstoff ausschließlich aus dem zweiten Druckbehälter (12) entnommen wird, sofern der Brennstoff in dem zweiten Druckbehälter (12) eine Temperatur ($\vartheta_2$) außerhalb eines zuvor definierten zulässigen Temperaturfensters (TB) aufweist, oder

- **dass** der Brennstoff zunächst zumindest teilweise aus dem zweiten Druckbehälter (12) entnommen wird, bevor der Brennstoff ausschließlich aus dem ersten Druckbehälter (11) entnommen wird, sofern der Brennstoff in dem zweiten Druckbehälter (12) eine Temperatur ($\vartheta_2$) innerhalb eines zuvor definierten Temperaturfensters (TB) aufweist, wobei die Brennstoffentnahme aus dem zweiten Druckbehälter (12) gestoppt und auf den ersten Druckbehälter (11) umgeschaltet wird, sobald die Temperatur ($\vartheta_2$) des Brennstoffs aus dem zweiten Druckbehälter (12) das zuvor definierte Temperaturfenster (TB)verlässt.

2. Verfahren (100) gemäß Anspruch 1,
   **dadurch gekennzeichnet,**
   **dass** der erste Druckbehälter (11) nach einer zumindest teilweisen Entleerung mit Brennstoff aus dem zweiten Druckbehälter (12) aufgefüllt wird.

3. Verfahren (100) gemäß einem der vorhergehenden Ansprüche,
   **dadurch gekennzeichnet,**
   **dass** die Entnahme von Brennstoff aus dem ersten Druckbehälter (11) oder dem zweiten Druckbehälter (12) über eine Kontrolleinheit gesteuert wird, wobei die Druckbehälter (11, 12) jeweils ein Entnahmeventil aufweisen und die Kontrolleinheit die Entnahmeventile ansteuert, wobei die Kontrolleinheit Informationen über die Temperatur des Brennstoffs in dem ersten Druckbehälter (11) und in dem zweiten Druckbehälter (12) empfängt und diese Temperaturen mit einem zuvor definierten Temperaturfenster (TB) vergleicht.

4. Vorrichtung zur Durchführung des Verfahrens (100) gemäß einem der vorherigen Ansprüche,
   **dadurch gekennzeichnet,**
   **dass** die Vorrichtung ein Druckbehältersystem (10) mit einem ersten Druckbehälter (11) mit einem ersten Volumen ($V_1$) und mit einem zweiten Druckbehälter (12) mit einem zweiten Volumen ($V_2$) aufweist, wobei das erste Volumen ($V_1$) kleiner ist als das zweite Volumen ($V_2$), wobei der erste Druckbehälter (11) und der zweite Druckbehälter (12) jeweils ein Entnahmeventil aufweisen und die Vorrichtung eine Kontrolleinheit aufweist, wobei die Kontrolleinheit dafür konfiguriert ist, das Verfahren gemäß einem der vorherigen Ansprüche auszuführen und die Entnahmeventile von der Kontrolleinheit ansteuerbar sind, wobei Informationen über die Temperatur des Brennstoffs in dem ersten Druckbehälter (11) und in dem zweiten Druckbehälter (12) von der Kontrolleinheit empfangbar sind.

5. Vorrichtung gemäß Anspruch 4,
   **dadurch gekennzeichnet,**

**dass** der erste Druckbehälter (11) und der zweite Druckbehälter (12) jeweils ein im Wesentlichen zylindrisch geformtes Segment aufweisen und das im Wesentlichen zylindrisch geformte Segment des ersten Druckbehälters (11) einen Durchmesser ($D_1$) aufweist, der kleiner ist als der Durchmesser ($D_2$) des im Wesentlichen zylindrisch geformten Segments des zweiten Druckbehälters (12).

6. Vorrichtung gemäß einem der Ansprüche 4 oder 5,
   **dadurch gekennzeichnet,**
   **dass** die Kontrolleinheit ein System zur Datenverarbeitung aufweist, wobei das System zur Datenverarbeitung Mittel zur Ausführung des Verfahrens nach einem der Ansprüche 1 bis 3 umfasst.

## Claims

1. A method (100) for removing a fuel from a pressure container system (10) with a first pressure container (11) with a first volume ($V_1$) and a second pressure container (12) with a second volume ($V_2$), wherein the first volume ($V_1$) is smaller than the second volume ($V_2$),
   **characterized in**

   - **that** the fuel is initially at least partly removed from the first pressure container (11) before the fuel is removed exclusively from the second pressure container (12), provided that the fuel in the second pressure container (12) has a temperature ($\vartheta_2$) outside a previously defined permissible temperature window (TB),
   or
   - **that** the fuel is initially at least partly removed from the second pressure container (12) before the fuel is removed exclusively from the first pressure container (11), provided that the fuel in the second pressure container (12) has a temperature ($\vartheta_2$) within a previously defined temperature window (TB), wherein the fuel removal from the second pressure container (12) is stopped and switched to the first pressure container (11) as soon as the temperature ($\vartheta_2$) of the fuel from the second pressure container (12) leaves the previously defined temperature window (TB).

2. The method (100) according to claim 1,
   **characterized in**
   **that** after an at least partial emptying the first pressure container (11) is filled up with fuel from the second pressure container (12).

3. The method (100) according to any one of the preceding claims,
   **characterized in**

**that** the removal of fuel from the first pressure container (11) or the second pressure container (12) is controlled via a control unit, wherein the pressure containers (11, 12) each have a removal valve and the control unit actuates the removal valves, wherein the control unit receives information about the temperature of the fuel in the first pressure container (11) and in the second pressure container (12) and compares these temperatures to a previously defined temperature window (TB).

4. A device for carrying out the method (100) according to any one of the preceding claims, **characterized in that** the device has a pressure container system (10) with a first pressure container (11) with a first volume ($V_1$) and with a second pressure container (12) with a second volume ($V_2$), wherein the first volume ($V_1$) is smaller than the second volume ($V_2$), wherein the first pressure container (11) and the second pressure container (12) each have a removal valve and the device has a control unit, wherein the control unit is configured for carrying out the method according to any one of the preceding claims and the removal valves can be actuated by the control unit, wherein information about the temperature of the fuel in the first pressure container (11) and in the second pressure container (12) can be received by the control unit.

5. The device according to claim 4, **characterized in that** the first pressure container (11) and the second pressure container (12) each have an essentially cylindrically shaped segment and the essentially cylindrically shaped segment of the first pressure container (11) has a diameter ($D_1$), which is smaller than the diameter ($D_2$) of the essentially cylindrically shaped segment of the second pressure container (12).

6. The device according to any one of claims 4 or 5, **characterized in that** the control unit has a system for data processing, wherein the system for data processing comprises means for carrying out the method according to any one of claims 1 to 3.

**Revendications**

1. Procédé (100) pour prélever un combustible d'un système de réservoirs sous pression (10) comprenant un premier réservoir sous pression (11) d'un premier volume ($V_1$) et un deuxième réservoir sous pression (12) d'un deuxième volume ($V_2$), le premier volume ($V_1$) étant inférieur au deuxième volume ($V_2$), **caractérisé en ce que**

- le combustible est d'abord prélevé au moins en partie du premier réservoir sous pression (11) avant d'être prélevé exclusivement du deuxième réservoir sous pression (12), dans la mesure où le combustible dans le deuxième réservoir sous pression (12) présente une température ($\vartheta_2$) en dehors d'une plage de températures admissibles (TB) prédéfinie, ou
- le combustible est d'abord prélevé au moins en partie du deuxième réservoir sous pression (12) avant d'être prélevé exclusivement du premier réservoir sous pression (11), dans la mesure où le combustible dans le deuxième réservoir sous pression (12) présente une température ($\vartheta_2$) comprise dans une plage de températures (TB) prédéfinie, le prélèvement de combustible du deuxième réservoir sous pression (12) étant arrêté et basculé sur le premier réservoir sous pression (11) dès que la température ($\vartheta_2$) du combustible provenant du deuxième réservoir sous pression (12) quitte la plage de températures (TB) prédéfinie.

2. Procédé (100) selon la revendication 1, **caractérisé en ce que** le premier réservoir sous pression (11) est rempli de combustible provenant du deuxième réservoir sous pression (12) après avoir été au moins partiellement vidé.

3. Procédé (100) selon l'une des revendications précédentes, **caractérisé en ce que** le prélèvement de combustible à partir du premier réservoir sous pression (11) ou du deuxième réservoir sous pression (12) est commandé par une unité de contrôle, les réservoirs sous pression (11, 12) comportant chacun une vanne de prélèvement et l'unité de contrôle commandant les vannes de prélèvement, l'unité de contrôle recevant des informations sur la température du combustible dans le premier réservoir sous pression (11) et dans le deuxième réservoir sous pression (12) et comparant ces températures à une plage de températures (TB) prédéfinie.

4. Dispositif pour la mise en œuvre du procédé (100) selon l'une des revendications précédentes, **caractérisé en ce que** le dispositif comprend un système de réservoirs sous pression (10) avec un premier réservoir sous pression (11) d'un premier volume ($V_1$) et un deuxième réservoir sous pression (12) d'un deuxième volume ($V_2$), le premier volume ($V_1$) étant inférieur au deuxième volume ($V_2$), le premier réservoir sous pression (11) et le deuxième réservoir sous pression (12) comportant chacun une vanne de prélèvement, et le dispositif comportant une unité de contrôle, l'unité de contrôle étant configurée pour exécuter le procédé selon l'une des revendications précédentes, et les vannes de prélèvement pouvant être commandées par l'unité de contrôle, des informations sur la température du combustible dans le premier réservoir sous pression (11) et dans le deuxième réservoir sous pression (12) pouvant être reçues par l'unité de contrôle.

5. Dispositif selon la revendication 4,
**caractérisé en ce que**
le premier réservoir sous pression (11) et le deuxième réservoir sous pression (12) présentent chacun un segment de forme essentiellement cylindrique et le segment de forme essentiellement cylindrique du premier réservoir sous pression (11) a un diamètre ($D_1$) qui est inférieur au diamètre ($D_2$) du segment de forme essentiellement cylindrique du deuxième réservoir sous pression (12).

6. Dispositif selon l'une des revendications 4 ou 5,
**caractérisé en ce que**
l'unité de contrôle comporte un système de traitement de données, le système de traitement de données comprenant des moyens pour exécuter le procédé selon l'une des revendications 1 à 3.

Fig. 1

10

12

11

20

$D_2$

$D_1$

Fig. 2

**IN DER BESCHREIBUNG AUFGEFÜHRTE DOKUMENTE**

**In der Beschreibung aufgeführte Patentdokumente**

- DE 102021103105 A1